# EUROPÄISCHE PATENTSCHRIFT

(11) **EP 0 617 519 B1**
(45) Veröffentlichungstag und Bekanntmachung des Hinweises auf die Patenterteilung: **12.06.2002**
(21) Anmeldenummer: 94103158.5
(22) Anmeldetag: 03.03.1994
(51) Int. Cl.: H04B 1/16, H04B 1/10, H04B 1/30, H03D 1/22

(54) **Verfahren zur Ableitung mindestens eines von der Qualität eines empfangenen Signals abhängigen Qualitätssignals**
Method for deriving at least one quality indication of a received signal
Méthode pour dériver au moins un signal indiquant la qualité d'un signal reçu

(30) Priorität: 24.03.1993 DE 4309518
(43) Veröffentlichungstag der Anmeldung: 28.09.1994
(73) Patentinhaber: Blaupunkt-Werke GmbH, D-31139 Hildesheim (DE)
(72) Erfinder: Kässer, Jürgen, Dr., D-31199 Diekholzen (DE); Herrmann, Matthias, Dr., D-31141 Hildesheim (DE)

(56) Entgegenhaltungen:
- EP-A- 0 320 883
- EP-A- 0 418 036

## Beschreibung

Die Erfindung betrifft ein Verfahren zur Ableitung mindestens eines von der Qualität eines empfangenen Signals abhängigen Qualitätssignals, wobei das empfangene Signal demoduliert wird.

Insbesondere bei Autoradios kann die Empfangsqualität stark schwanken - beispielsweise durch Einbrüche der empfangenen Feldstärke, durch Mehrwegeempfang oder durch Empfang von Störsignalen. Um die dadurch bedingten Störungen möglichst gering zu halten, sind verschiedene Maßnahmen zur Maskierung dieser Störungen im NF-Signal bekannt. So ist es beispielsweise bei einem schlechten Empfang möglich, das NF-Signal vorübergehend zu dämpfen oder die Stereokanaltrennung zu verringern. Diese bekannten Maßnahmen setzen allerdings voraus, daß die Signalqualität einwandfrei bestimmt werden kann.

EP-A-0 418 036 offenbart eine Anordnung und ein Verfahren zur Reduzierung hörbarer Störungen in einem wiedergegebenen, aus einem empfangenen Rundfunksignal durch Demodulation gewonnenen NF-Signal. Das Stereo-Multiplexsignal ist einem Stereodemodulator zur Gewinnung des Stereo-Summen- und des Differenzsignals zugeführt. Vor Überlagerung des Summen- und des Differenzsignals zur Bildung der Audiosignale für den linken und den rechten Kanal ist das Differenzsignal einem Tiefpass mit steuerbarer Grenzfrequenz zugeführt. Die Steuerung der Grenzfrequenz des Tiefpasses erfolgt in Abhängigkeit eines die Empfangsfeldstärke, eines oberhalb des Nutzsignalbereichs im Multiplexsignal enthaltene Signalanteile anzeigenden Signals, so dass im Falle schlechten Empfangs die Grenzfrequenz des Tiefpasses verringert und damit die Stereokanaltrennung zu niedrigeren Frequenzen des Audiosignals hin aufgehoben wird.

Aufgabe der vorliegenden Erfindung ist es, ein verbessertes Verfahren zur Ableitung mindestens eines von der Qualität eines empfangenen Signals abhängigen Qualitätssignals anzugeben.

Diese Aufgabe wird erfindungsgemäß dadurch gelöst, daß ein von der Feldstärke abhängiges Hilfssignal und ein weiteres Hilfssignal aus dem demodulierten Signal abgeleitet werden und daß das Hilfssignal und das weitere Hilfssignal zur Bildung des Qualitätssignals kombiniert werden.

Es ist dabei erfindungsgemäß vorgesehen, daß das weitere Hilfssignal von der Amplitude der oberhalb eines Nutzfrequenzbereichs liegenden Anteile des demodulierten Signals abhängt. Vorzugsweise ist dabei vorgesehen, daß bei einem Stereo-Multiplex-Signal mit einem Radio-Daten-Signal die höherfrequenten Anteile oberhalb von 60 kHz liegen.

Dies hat den Vorteil, daß das Verfahren schnell und empfindlich auf Störungen reagiert. Außerdem ist die Anwendung dieser Ausführungsform beim Empfang von Signalen möglich, welche keinen modulierten Hilfsträger, insbesondere kein hilfsträgerfrequentes Stereo-Differenzsignal, enthalten.

Weiter ist es erfindungsgemäß vorgesehen, daß das weitere Hilfssignal von der Symmetrie der Seitenbänder eines im demodulierten Signal enthaltenen modulierten Hilfsträgers abhängt. Dadurch werden Störungen nur erkannt, wenn sie sich wirklich auf eine Beeinträchtigung des NF-Signals auswirken. Eine vorteilhafte Anwendung dieser Ausführungsform besteht darin, daß der modulierte Hilfsträger ein hilfsträgerfrequentes Stereo-Differenzsignal ist.

Eine Ausgestaltung dieser Ausführungsform ist für verschiedene bekannte Stereo-Decoder geeignet und besteht darin, daß zur Ableitung des von der Symmetrie der Seitenbänder abhängenden weiteren Hilfssignals ein durch Multiplikation des hilfsträgerfrequenten Stereo-Differenzsignals mit einem um 90° phasengedrehten Referenzträger gewonnenes Signal nach einer Betragsbildung mit einem Schwellwert verglichen wird.

In der Patentanmeldung DE-A-43 03 387 der Anmelderin ist ein Stereo-Decoder angegeben, bei dem ein Referenzträger nicht mit dem Hilfsträger des empfangenen Radio-Daten-Signals verkoppelt ist. Hierfür eignet sich insbesondere eine weitere Ausgestaltung, die darin besteht, daß zur Ableitung des von der Symmetrie der Seitenbänder abhängenden weiteren Hilfssignals zwei durch Multiplikation des hilfsträgerfrequenten Stereo-Differenzsignals mit zwei um 90° gegeneinander phasengedrehten Referenzträgern gewonnene Signale mit je einem aus einer Phasenverschiebung zwischen dem Hilfsträger und dem jeweiligen Referenzträger abgeleiteten Korrektursignal multipliziert und anschließend addiert werden und daß das durch die Addition gewonnene Signal nach einer Betragsbildung mit einem Schwellwert verglichen wird.

Bei einer weiteren vorteilhaften Ausführungsform, bei welcher das demodulierte Signal ein Stereo-Multiplex-Signal mit einem Radio-Daten-Signal ist, ist vorgesehen, daß ein erstes Signal von Anteilen des Stereo-Multiplex-Signals oberhalb von 60 kHz und ein zweites Signal durch Vergleich der Seitenbänder des Stereo-Differenzsignals abgeleitet wird und daß das erste und das zweite Signal zur Formung des weiteren Hilfssignals über eine Logikschaltung und einen Impulsbreitendiskriminator geleitet werden.

Diese Ausführungsform zeichnet sich dadurch aus, daß eine Erkennung der Empfangsqualität sowohl bei Stereo-Empfang als auch bei Mono-Empfang möglich ist. Auch in Ländern, in denen abweichende Stereo-Verfahren verwendet werden, ist ein Einsatz dieses Verfahrens möglich, wobei dann zur Ableitung des weiteren Hilfssignals lediglich die Auswertung der oberhalb des Nutzbereichs liegenden Frequenzen erfolgt.

Das erfindungsgemäße Verfahren ermöglicht, je nach Art der Beeinträchtigung der Qualität des empfangenen Signals verschiedene Maskierungen des NF-Signals durchzuführen. Zur vorübergehenden Einstellung einer zusätzlichen Dämpfung des NF-Signals kann gemäß einer Weiterbildung der Erfindung vorgesehen sein, daß das amplitudendemodulierte empfangene Signal zwei Tiefpässen mit unterschiedlichen Grenzfrequenzen zuführbar ist und daß die Ausgänge der Tiefpässe mit Eingängen eines Umschalters verbunden sind, der von dem weiteren Hilfssignal steuerbar ist. Besonders vorteilhaft dabei ist, wenn ferner das Ausgangssignal des Umschalters gewichtet und mit dem über einen asymmetrischen Integrator geleiteten weiteren Hilfssignal zur Bildung eines Qualitätssignals multipliziert wird, das zur Dämpfung eines aus dem demodulierten Signal gewonnenen NF-Signals während einer Störung dient.

Eine andere Weiterbildung der Erfindung besteht darin, daß das Hilfssignal gewichtet und mit dem über einen asymmetrischen Integrator geleiteten weiteren Hilfssignal zur Bildung eines Qualitätssignals multipliziert wird, das zu einer Verringerung der Stereokanaltrennung während einer Störung dient.

Durch die in den weiteren Unteransprüchen aufgeführten Maßnahmen sind weitere vorteilhafte Weiterbildungen und Verbesserungen der im Hauptanspruch angegebenen Erfindung möglich.

Ausführungsbeispiele der Erfindung sind in der Zeichnung anhand mehrerer Figuren dargestellt und in der nachfolgenden Beschreibung näher erläutert. Es zeigt:
- Fig. 1: ein Blockschaltbild einer erfindungsgemäßen Schaltungsanordnung,
- Fig. 2: ein Blockschaltbild eines Teils eines Rundfunkempfängers mit der erfindungsgemäßen Schaltungsanordnung,
- Fig. 3: ein Hochpaßfilter als Teil einer erfindungsgemäßen Schaltungsanordnung,
- Fig. 4: eine Detektorschaltung zur Auswertung der Ausgangssignale des Hochpaßfilters,
- Fig. 5: einen Symmetrie-Detektor für die Seitenbänder des hilfsträgerfrequenten Stereo-Differenzsignals,
- Fig. 6: ein logisches Netzwerk,
- Fig. 7: eine Schaltungsanordnung zur Filterung des weiteren Hilfssignals,
- Fig. 8: einen asymmetrischen Integrator für das weitere Hilfssignal und
- Fig. 9: eine Schaltungsanordnung zur Wichtung des Hilfssignals.

Gleiche Teile sind in den Figuren mit gleichen Bezugszeichen versehen. Eine Schaltungsanordnung zur Durchführung des erfindungsgemäßen verfahrens kann auf verschiedene Weise verwirklicht werden. So können beispielsweise einzelne oder Gruppen der dargestellten Blöcke durch geeignete Schaltungen, insbesondere integrierte Schaltungen, realisiert werden. Bei sehr hohem Integrationsgrad ist es ferner möglich, die gesamte digitale Signalverarbeitung des Empfängers in einem integrierten Schaltkreis zu realisieren, wobei Signalverarbeitungsschritte, wie beispielsweise Filterungen oder nichtlineare Wichtungen, durch Rechenoperationen durchgeführt werden. Innerhalb eines integrierten Schaltkreises können zur Realisierung eines Empfängers mit der erfindungsgemäßen Schaltungsanordnung auch digitale Signalprozessoren und andere digitale Schaltungen, wie beispielsweise Schieberegister, Flip-Flops usw., gemeinsam angeordnet sein.

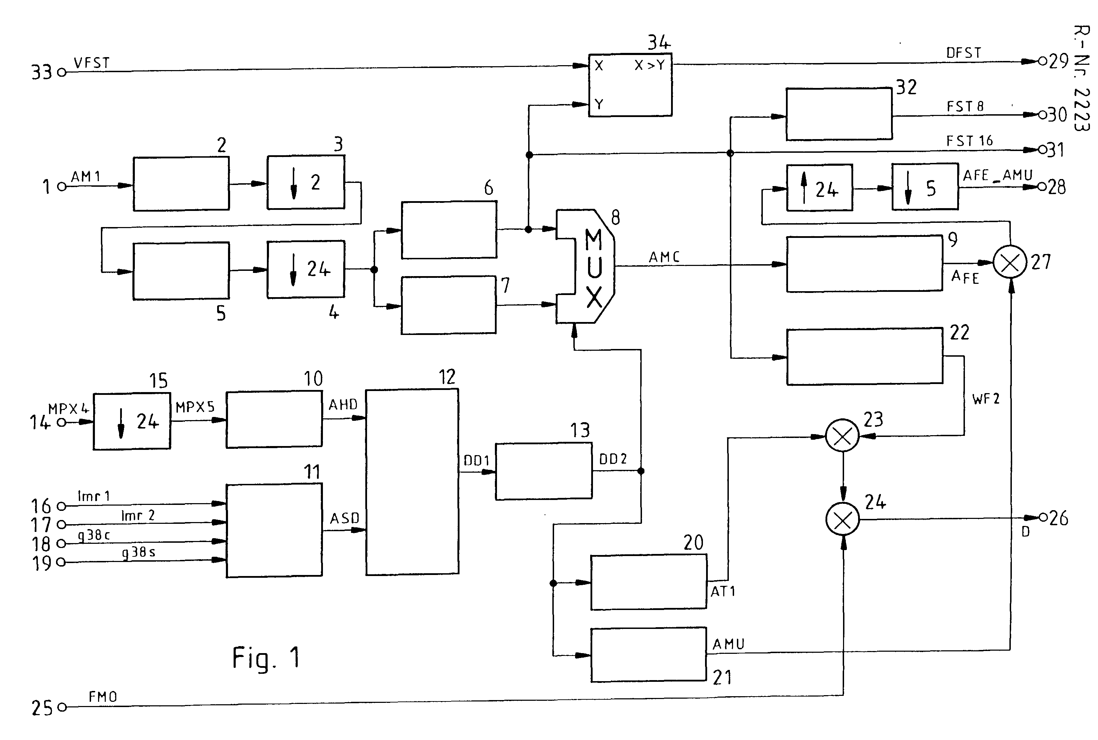

Der Schaltungsanordnung nach Fig. 1 wird bei 1 das Ausgangssignal AM1 eines nicht dargestellten Amplitudendemodulators zugeführt. Es dient als Maß für die Feldstärke. Das Signal AM1 mit einer Abtastfrequenz von 456 kHz wird zunächst in einem Filter 2 einer Kammfilterung unterzogen. Dieses verhindert, daß sich bei der nachfolgenden Unterabtastung um den Faktor 2 bei 3 und später um den Faktor 24 bei 4 höherfrequente Spektralkomponenten auf den Gleichanteil abbilden und diesen in unzulässiger Weise verfälschen. Eine weitere Tiefpaßfilterung 5 ist zwischen den Abtastgliedern 3 und 4 vorgesehen.

Das somit bezüglich der Abtastraten dezimierte Feldstärkesignal erfährt in zwei Tiefpaßgliedern 6, 7 eine Mittelung mit unterschiedlichen Zeitkonstanten. Ein Umschalter 8 leitet in Abhängigkeit eines Signals DD2 eines der Ausgangssignale der Tiefpaßglieder 6, 7 als Signal AMC weiter. Dieses wird bei 9 in Form einer Aufrauschkurve zur Erzeugung der Aufrauschdämpfung A_{FE} gewichtet. Das Feldstärkesignal der kleineren Zeitkonstante, also das "schnelle" Feldstärkesignal FST16 am Ausgang des Tiefpaßgliedes 6 dient außerdem zur Reduzierung der Stereokanaltrennung D bei Absinken der Feldstärke. Die weitere Verarbeitung der Signale A_{FE} und FST16, wobei letzteres ein erster Hilfssignal darstellt, wird später erläutert.

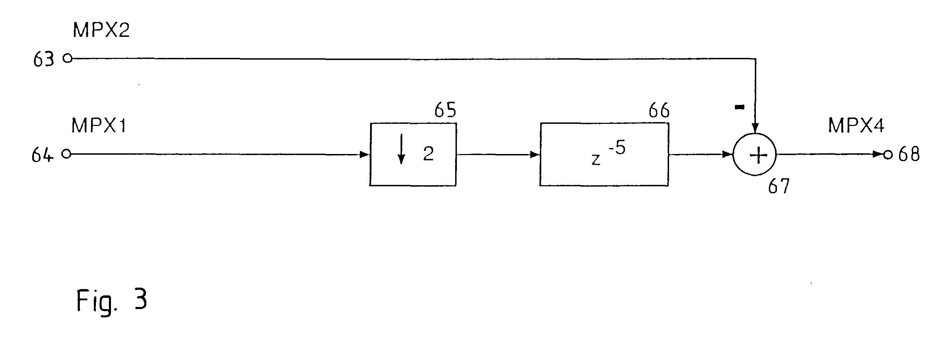

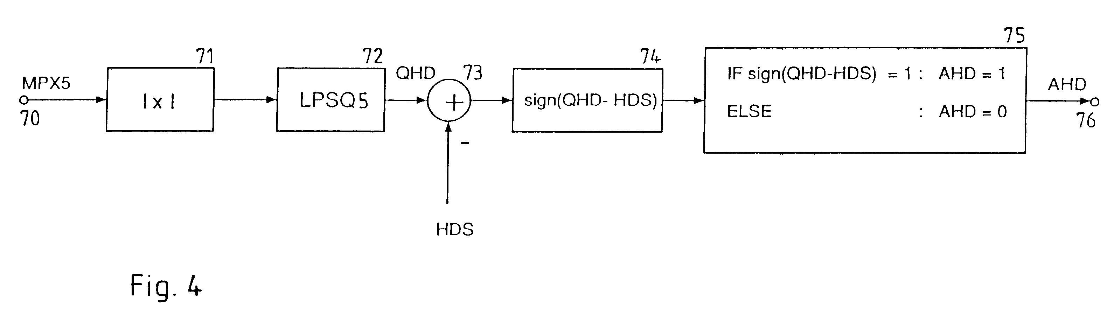

Zur Erzeugung des weiteren Hilfssignals DD2 dienen ein Hochpaß-Detektor 10, ein Symmetrie-Detektor 11 und ein logisches Netzwerk 12, dessen Ausgangssignal DD1 über einen Impulsbreitendiskriminator 13 geleitet wird. Dem Hochpaß-Detektor 10, der im einzelnen in Fig. 4 erläutert wird, wird über einen Eingang 14 und eine Abtastratenreduzierung 15 ein Signal MPX5 zugeführt, das Anteile des Stereo-Multiplex-Signals oberhalb von 60 kHz enthält, die jedoch bereits in das Basisband transformiert sind. Eine solche Schaltung ist in Fig. 3 näher erläutert.

Das Ausgangssignal AHD des Hochpaß-Detektors 10 nimmt den Wert 1 an, wenn die Amplitude von Signalanteilen oberhalb von 60 kHz oberhalb eines Schwellwertes liegen. Dieses hat den grundsätzlichen Vorteil, sehr pünktlich auf jede Art von Störungen - also auch auf solche, die keine Mehrwegestörungen sind - zu reagieren. Es kann jedoch im Extremfall dazu führen, daß zwar eine Störung gemeldet wird, die jedoch im ausseitigen NF-Signal des Empfängers noch zu keinen hörbaren Störungen führt. Trotzdem würden in diesem Fall die zur Maskierung von Störungen vorgesehenen Maßnahmen eingeleitet werden.

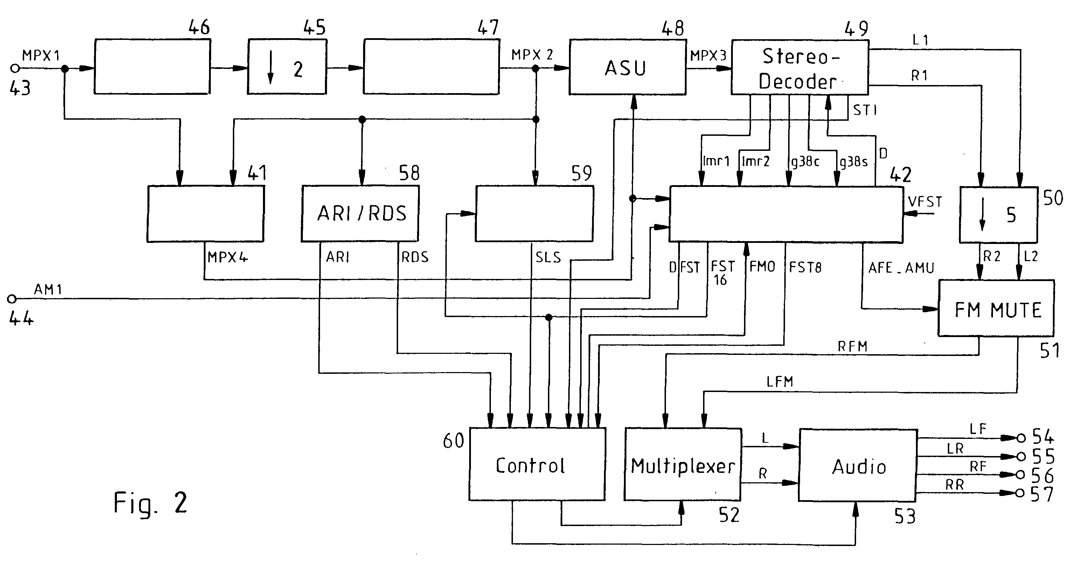

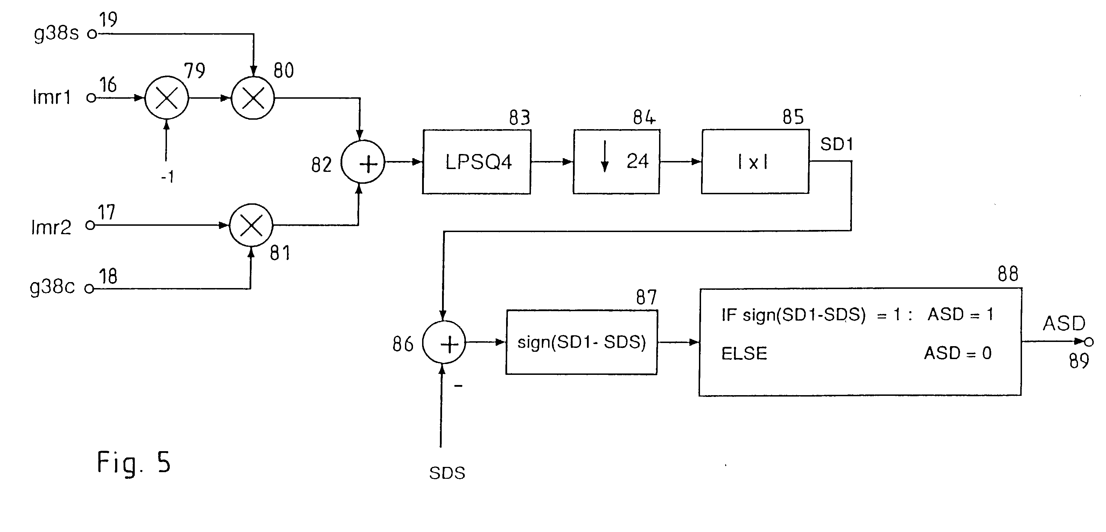

Eine auf die Erkennung von hörbaren Störungen ausgerichtete Weiterbildung der Erfindung besteht in der Auswertung der Symmetrie des trägerfrequenten Stereo-Differenzsignals. Wesentlich ist bei diesem Vorgehen einerseits, daß ein ungestörtes Signal aufgrund der Zwei-Seitenband-Amplitudenmodulation symmetrisch zum Träger sein muß, und andererseits, daß hier unmittelbar das Nutzsignal betrachtet wird. Eine Asymmetrie läßt daher den Schluß zu, daß eine auch im NF-Signal hörbare Störung vorliegt. Über Eingänge 16 bis 19 werden dem Symmetrie-Detektor 11 von einem Stereo-Decoder (Fig. 2) Signale zugeführt, die im wesentlichen das Produkt des trägerfrequenten Stereo-Differenzsignals mit einem Referenzträger darstellen, der in Quadratur zum Hilfsträger steht. Einzelheiten des Symmetrie-Detektors werden später im Zusammenhang mit Fig. 5 erläutert. Das Ausgangssignal ASD des Symmetrie-Detektors nimmt den Wert 1 an, wenn eine Asymmetrie vorhanden ist.

Bei vielen Anwendungsfällen bringt die Verwendung eines der Signale AHD bzw. ASD als weiteres Hilfssignal DD2 bereits erhebliche Vorteile. Bei dem dargestellten Ausführungsbeispiel sind jedoch beide Detektoren 10, 11 vorgesehen, wobei die Ausgangssignale AHD und ASD über ein logisches Netzwerk 12 geleitet werden. Dieses hat einerseits den Vorteil, daß bei reinen Mono-Sendungen, bei denen kein trägerfrequentes Stereo-Differenzsignal gesendet wird, die Ableitung des weiteren Hilfssignals DD2 durch den Hochpaß-Detektor 10 erfolgt. Ebenso ist die Ableitung des weiteren Hilfssignals DD2 auch bei von der europäischen Norm abweichenden Verfahren zur Stereo-Signalübertragung möglich - beispielsweise bei dem FMX-Verfahren in den USA.

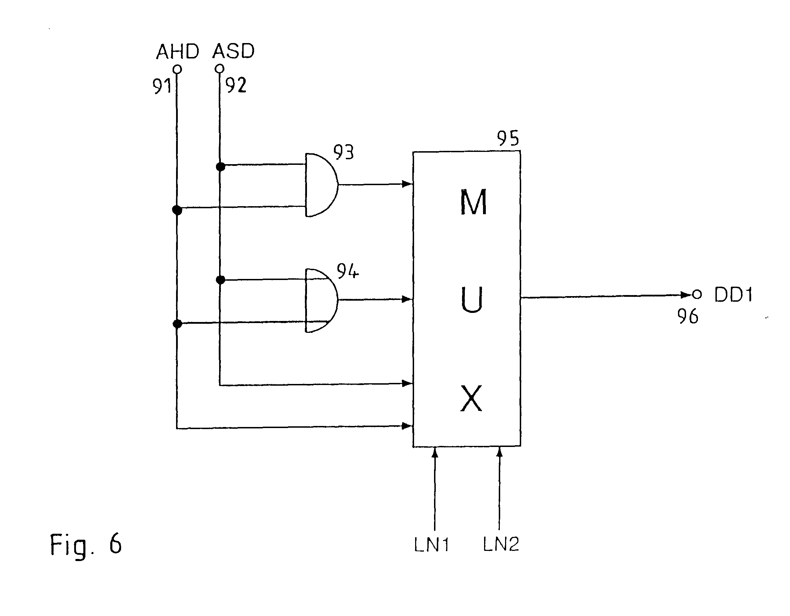

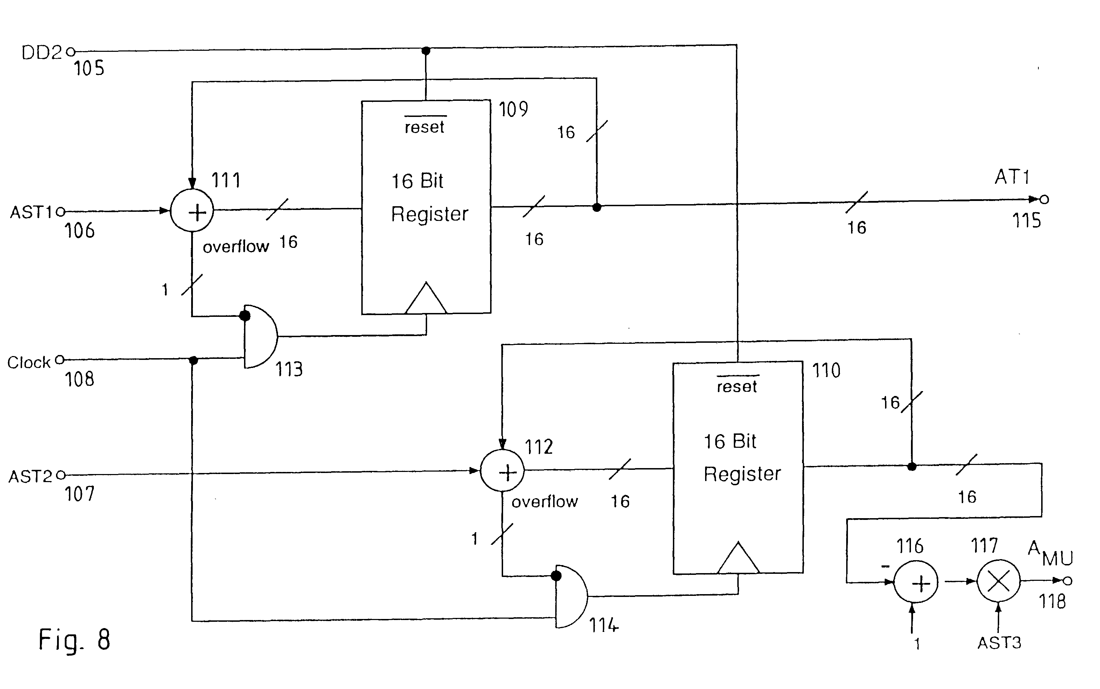

Das logische Netzwerk ermöglicht die Auswahl oder die Art der logischen Verknüpfung der beiden Signale AHD und ASD zum Signal DD1. Ein Ausführungsbeispiel für das logische Netzwerk 12 ist in Fig. 6 dargestellt. Das Signal DD1 wird über einen Impulsbreitendiskriminator 13 geleitet, der dafür sorgt, daß das Ausgangssignal DD2 erst dann eine Störung anzeigt, wenn das Eingangssignal DD1 für eine einstellbare Mindestzeitdauer aktiv ist. Wie bereits erwähnt, schaltet das Signal DD2 zwischen einer großen und einer kleinen Zeitkonstanten bei der Bildung des Feldstärkesignals um. Ferner dient das Signal DD2 als Triggersignal für zwei asymmetrische Integratoren 20, 21, von denen ein Ausführungsbeispiel in Fig. 8 dargestellt ist.

Die Ausgangssignale AT1 und AMU der asymmetrischen Integratoren 20, 21 springen im Moment des Triggerns auf 0 bzw. 0,707 und bleiben solange auf diesen Werten, wie DD2 auf Null liegt, um dann mit einstellbaren Zeitkonstanten linear auf einen Maximalwert anzusteigen. Das Signal AT1 wird gemeinsam mit dem bei 22 gewichteten Feldstärkesignal WF2 einem Multiplizierer 23 zugeführt. Dadurch wird ein Signal gebildet, das eine Maskierung von Störungen im NF-Signal durch eine Verminderung der Stereokanaltrennung bewirkt. Dieses wird in einem weiteren Multiplizierer 24 mit einem bei 25 zugeführten Signal FMO multipliziert, das zur zwangsweisen Aufhebung der Stereokanaltrennung dient. Vom Ausgang 26 kann das Signal D entnommen und dem Stereo-Decoder zugeführt werden.

Das Ausgangssignal AMU des asymmetrischen Integrators 21 wird zusammen mit dem Signal A_{FE} einem weiteren Multiplizierer 27 zugeführt, wodurch ein Signal AFE_AMU entsteht, das eine Dämpfung des NF-Signals um maximal 33dB bewirkt (3dB muting + 30dB Aufrauschdämpfung), das dem Ausgang 28 entnehmbar ist.

In einem digitalen Rundfunkempfänger werden an mehreren Stellen Informationen zur Feldstärke benötigt. Dazu weist die Schaltungsanordnung nach Fig. 1 drei weitere Ausgänge 29, 30, 31 auf, an denen Signale abnehmbar sind, welche die Feldstärke beschreiben. Das bereits beschriebene Signal FST16 ist 16 Bit genau. Für manche Zwecke genügt jedoch auch ein Signal mit geringerer Genauigkeit, deswegen wird mit Hilfe einer Kompressionskennlinie 32 ein Feldstärkesignal FST8 mit einer Bitbreite von 8 erzeugt.

Die Signale FST16 und FST8 sind zwar für die Zwecke der Kennung der Signalqualität ausreichend schnell, sie sind jedoch durch die im Zusammenhang mit Fig. 1 beschriebenen Filter und gegebenenfalls durch die Amplituden-Demodulation nicht frei von einer gewissen Trägheit. Über einen Eingang 33 ist von einem nicht dargestellten Microcontroller ein Signal VFST zuführbar. Aus diesem Signal und dem Signal FST16 wird mit Hilfe eines Komparators 34 ein Signal DFST erzeugt, dessen jeweiliger Pegel (0 bzw. 1) davon abhängt, ob das Signal VFST oder das Signal FST16 größer ist. Dadurch zeigt das am Ausgang 29 abnehmbare Signal DFST die Änderungsrichtung der Feldstärke an.

Bevor weitere Einzelheiten der Schaltungsanordnung nach Fig. 1 im Zusammenhang mit den Figuren 3 bis 9 erläutert werden, wird anhand von Fig. 2 der Einsatz einer erfindungsgemäßen Schaltungsanordnung in einem Rundfunkempfänger erläutert, wobei Fig. 2 die digitale Verarbeitung des Stereo-Multiplex-Signals und der Audiosignale darstellt.

Die schraffierten Schaltungsblöcke 41, 42 bilden dabei eine erfindungsgemäße Schaltungsanordnung, wobei der Schaltungsblock 42 die in Fig. 1 dargestellten Einzelheiten enthält. Einem Eingang 43 wird von einem FM-Demodulator ein digitales Stereo-Multiplex-Signal MPX1 zugeleitet, während ein weiterer Eingang 44 von einem AM-Modulator das Signal AM1 erhält. Das Stereo-Multiplex-Signal MPX1 wird zunächst einer Abtastratenhalbierung unterzogen, wobei das Signal MPX2 entsteht. Bei einem praktisch ausgeführten Ausführungsbeispiel beträgt die Abtastrate des Signals MPX1 456 kHz, was ein ganzzahliges Vielfaches der Trägerfrequenz des Radio-Daten-Signals (57 kHz) ist.

Diese hohe Abtastfrequenz erfordert jedoch eine große Anzahl von Rechenoperationen je Sekunde. Bei dem dargestellten Rundfunkempfänger ist man deshalb bestrebt, mit möglichst geringen Abtastraten zu arbeiten, die an die Bandbreite des jeweiligen Signals angepaßt sind. Deshalb wird das Signal MPX1 bei 45 einer Abtastratenhalbierung unterzogen, wozu zuvor eine Tiefpaßfilterung 46 erforderlich ist. Da jedoch das an sich erforderliche Tiefpaßfilter mit einem geradlinigen Frequenzgang über den größten Teil des Durchlaßbereiches und einem steilen Abfall im Bereich der halben bereits halbierten Abtastfrequenz sehr aufwendig ist, wurde ein Tiefpaßfilter 46 verwendet, das einen allmählichen Abfall aufweist. Ein Kompensationsfilter 47 mit einem entgegengesetzten Frequenzgang hebt jedoch den dadurch entstehenden Fehler wieder auf.

Das Signal MPX2 mit einer Abtastfrequenz von 228 kHz wird einer Schaltung 48 zur automatischen Störunterdrückung zugeleitet. Derartige Schaltungen unterdrücken kurze impulsförmige Störungen und sind unter dem Kürzel ASU bekanntgeworden. Das Ausgangssignal MPX3 der Schaltung 48 gelangt in einen Stereo-Decoder 49, der die beiden Audiosignale L1 und R1 (links und rechts) erzeugt, die bei 50 einer Abtastratenwandlung um den Teiler 5 unterzogen werden. Die dadurch entstehenden Audiosignale L2, R2 werden über eine Schaltung 51 mit steuerbarer Dämpfung als Signale LFM und RFM Eingängen eines Quellenumschalters 52 zugeführt. In nicht dargestellter Weise können dem Quellenumschalter andere Audiosignale zugeleitet werden, beispielsweise von einem CD-Spieler oder einem Bandgerät.

Die Ausgangssignale des Quellenumschalters 52 gelangen als Signale L, R zu einem Audioprozessor 53, mit dessen Hilfe Einstellungen, wie beispielsweise Lautstärke, Balance und Höhen- und Tiefenabsenkung bzw. -anhebung, vorgenommen werden. Der Audioprozessor 53 hat vier Ausgänge 54, 55, 56, 57, von denen die Signale LF, LR, RF und RR jeweils einer nicht dargestellten Endstufe für vier Lautsprecher zugeführt werden können.

Das Stereo-Multiplex-Signal MPX2 gelangt ferner zu einem Decoder 58 für Verkehrsfunksignale und/oder Radio-Daten-Signale. Außerdem wird das Signal MPX2 von einer Schaltung 59 für den Suchlaufstopp benötigt.

Eine Steuereinheit 60 erhält Signale von den Schaltungen 58, 59 und 42 sowie vom Stereo-Decoder 49. Sie gibt Signale ab an die Schaltung 42, den Quellenumschalter 52 und den Audioprozessor 53. Weitere Verbindungen der Steuereinheit 60 - beispielsweise mit Bedien- und Anzeigevorrichtungen - sind in Fig. 2 nicht dargestellt.

Wie bereits im Zusammenhang mit Fig. 1 erläutert, wird für den Hochpaß-Detektor 10 ein Signal benötigt, das aus den Anteilen des Stereo-Multiplex-Signals oberhalb von 60 kHz besteht. Dieses wird in der Schaltung 41 erzeugt, welcher die Signale MPX1 und MPX2 zugeführt werden. Ein Ausführungsbeispiel der Schaltung 41 ist in Fig. 3 dargestellt. Eingänge 63, 64 dieser Schaltung sind für die Signale MPX2 und MPX1 vorgesehen. Durch Unterabtastung des Signals MPX1 bei 65 und nach einem Laufzeitausgleich von 5 Taktperioden bei 66 wird von diesem Signal das Signal MPX2 bei 67 subtrahiert. Das Signal MPX4 am Ausgang 68 enthält im wesentlichen nur noch die ins Basisband verschobenen spektralen Anteile oberhalb von 60 kHz.

Dieses Signal wird nach einer Abtastratenreduzierung um den Teiler 24 bei 15 (Fig. 1) als Signal MPX5 dem Hochpaß-Detektor 10 zugeleitet, der im folgenden anhand von Fig. 4 näher erläutert wird. Einem Eingang 70 des Hochpaß-Detektors gemäß Fig. 4 ist das Signal MPX5 zuführbar, das nach einer Betragsbildung 71 mit Hilfe eines Tiefpaßfilters 72 gemittelt wird. Überschreitet das gemittelte Signal eine Schwelle HDS, nimmt das Ausgangssignal eines aus einem Subtrahierer 73 und einer Vorzeichenerkennung 74 bestehenden Komparators den Wert 1 an. Das Signal AHD am Ausgang 76 nimmt ebenfalls den Wert 1 an, wenn das Vorzeichen des Ausgangssignals des Subtrahierers 73 positiv ist.

Fig. 5 zeigt ein Ausführungsbeispiel des Symmetrie-Detektors 11 (Fig. 1), dessen Funktion darauf beruht, daß bei einer Multiplikation des Stereo-Multiplex-Signals mit einem Referenzträger, der in Quadratur zum Träger des Stereo-Differenzsignals liegt, im Falle von Seitenbändern mit gleich hoher Amplitude kein Ausgangssignal entsteht. Ein solches Signal entsteht ohnehin bei Stereo-Decodern mit einer Quadraturdemodulation des trägerfrequenten Stereo-Differenzsignals, bei welcher eine Multiplikation mit zwei gegeneinander um 90° phasenverschobenen Referenzträgern erfolgt und die Phasenlage zum Träger durch eine PLL-Schaltung festgelegt ist.

Bei der Verwendung derartiger Stereo-Decoder kann das aus der Demodulation der Quadraturkomponente gewonnene Signal unmittelbar einem Tiefpaß 83 zugeführt werden, an den sich eine Abtastratenwandlung 84 um den Teiler 24 anschließt. Danach erfolgt bei 85 eine Betragsbildung, worauf das entstandene Signal SD1 mit einem Schwellwert SDS bei 86 und 87 verglichen wird. Bei 88 wird das Vergleichsergebnis derart ausgewertet, daß das Signal ASD am Ausgang 89 den Wert 1 aufweist, wenn das Signal SD1 größer als der Schwellwert SDS ist.

Für einen Stereo-Decoder, bei welchem das hilfsträgerfrequente Stereo-Differenzsignal mit zwei gegeneinander um 90° phasenverschobenen Referenzträgern multipliziert wird, deren Phasenlage zum Träger nicht festgelegt ist, ist vor der Tiefpaßfilterung bei 83 die im folgendenen beschriebene Signalverarbeitung erforderlich. Den Eingängen 16 und 17 werden Signale lmr1 und lmr2 zugeführt, welche durch Multiplikation nit den beiden um 90° gegeneinander phasenverschobenen Referenzträgern entstehen. Eingängen 18, 19 wird jeweils ein Korrektursignal G38c und G38s zugeleitet, das den durch die fehlende Verkopplung entstehenden Fehler beschreibt. Mit diesen Korrektursignalen werden die Signale lmr1, das zuvor bei 79 mit -1 multipliziert wurde, und lmr2 bei 80 und 81 multipliziert. Die Ausgangssignale der Multiplizierer 80, 81 werden bei 82 addiert und dem Tiefpaßfilter 83 zugeleitet.

Das logische Netzwerk gemäß Fig. 6 erlaubt die wahlweise logische Verknüpfung der beiden Ausgangssignale AHD und ASD des Hochpaß-Detektors 10 (Fig. 1) und des Symmetrie-Detektors 11. Dazu werden die beiden Signale von den Eingängen 91, 92 über eine Und-Schaltung 93, über eine Oder-Schaltung 94 und direkt einem Umschalter 95 mit vier Eingängen zugeleitet. Mit Hilfe von zugeführten Steuersignalen LN1 und LN2 können entweder der Ausgang der Und-Schaltung 93, der Ausgang der Und-Schaltung 94 oder einer der Eingänge 91, 92 mit einem Ausgang 96 verbunden werden. Im Falle einer Verbindung des Ausgangs 96 mit dem Ausgang der Und-Schaltung 93 nimmt das Ausgangssignal DD1 nur dann den Pegel 1 ein, wenn beide Eingangssignale AHD und ASD den Pegel 1 aufweisen. Es wird also nur eine Störung gemeldet, wenn sowohl der Hochpaß-Detektor 10 als auch der Symmetrie-Detektor 11 eine Störung erkennen.

Ist der Ausgang 96 mit dem Ausgang der Oder-Schaltung 94 verbunden, wird bereits eine Störung gemeldet, wenn einer der Detektoren eine Störung erkennt. Schließlich wird bei einer Verbindung des Ausgangs 96 mit dem Eingang 91 bzw. mit dem Eingang 92 nur dann eine Störung gemeldet, wenn der Hochpaß-Detektor 10 bzw. der Symmetrie-Detektor 11 eine Störung erkennt. Die Steuersignale LN1, LN2 können voreingestellt sein und gegebenenfalls auch zur Anpassung der jeweiligen Einsatzbedingungen des Rundfunkempfängers geändert werden.

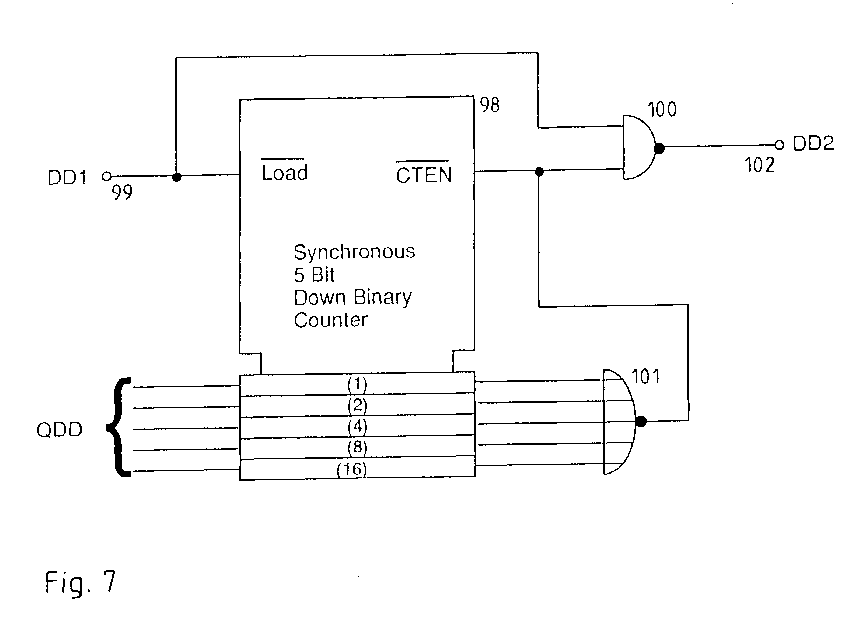

Fig. 7 zeigt ein Ausführungsbeispiel des Impulsbreitendiskriminators 13 (Fig. 1). Der wesentliche Bestandteil dieser Schaltung ist ein synchroner 5-Bit-Abwärts-Binärzähler 98, dessen invertierendem Load-Eingang über einen Eingang 99 das Signal DD1 vom logischen Netzwerk 12 (Fig. 1) zugeführt wird. Eingänge einer Nicht-Und-Schaltung 100 sind einerseits an den Eingang 99 und andererseits an einen Ausgang einer Nicht-Oder-Schaltung 101 und an einen invertierenden Count-enable-Eingang des Zählers 98 angeschlossen. PRESET-Eingängen des Zählers 98 ist eine Konstante QDD zuführbar, welche eine wählbare Totzeit darstellt.

Solange das Signal DD1 den Pegel 0 einnimmt (keine Störung) wird über den Load-Eingang der Zähler 98 beim Zählerstand QDD gehalten. Damit ist der Pegel des Ausgangs der Nicht-Oder-Schaltung 101 gleich 0, wodurch der Pegel des Signals DD2 am Ausgang 102 den Wert 1 einnimmt. Bei dem Signal DD2 bedeutet der Pegel 1, daß keine Störung vorliegt. Durch einen Sprung des Signals DD1 auf den Pegel 1 beginnt der Zähler 98 abwärts zu zählen. Der Pegel des Signals DD2 ändert sich jedoch nur, wenn das Signal DD1 mindestens für die vorgegebene Totzeit ununterbrochen den Pegel 1 beibehält. Dann erreicht der Zählerstand den Wert 0, worauf das Ausgangssignal der Nicht-Oder-Schaltung 101 auf 1 springt, wodurch der Zähler beim Zählerstand 0 festgehalten wird und das Signal DD2 auf den Pegel 0 geht. Springt das Signal DD1 wieder auf den Pegel 0, wird der Zähler wieder neu geladen, während das Signal DD2 ohne Verzögerung den Wert 1 einnimmt. Die Totzeit ist gleich dem Produkt aus QDD und der Taktperiode, mit der der Zähler getaktet wird.

Ein Ausführungsbeispiel für die asymmetrischen Integratoren 20, 21 (Fig. 1) ist in Fig. 8 dargestellt. Über Eingänge 105 bis 108 sind das Signal DD2, zwei Konstanten AST1 und AST2 und ein Taktsignal zuführbar. Für je einen der asymmetrischen Integratoren 20, 21 ist ein 16-Bit-Register 109, 110, ein Addierer 111, 112 und eine Und-Schaltung 113, 114 vorgesehen. Vom Ausgang 115 des Registers 109 ist das Signal AT1 abnehmbar, während der Ausgang des Registers 110 über einen Subtrahierer 116 und einen Multiplizierer 117 mit einem Ausgang 118 für das Signal AMU verbunden ist.

Solange das Signal DD2 auf 0 liegt (Störung liegt vor), weisen die Registerausgänge ebenfalls den Wert 0 auf. Damit gilt: AT1 = 0 und AMU = AST3 einer ebenfalls zugeführten Konstanten. Für den Fall, daß das Signal DD2 auf 1 (Ende der Störung) geht und auf diesem Pegel liegen bleibt, steigen die Ausgangswerte der Register in Abhängigkeit von den Konstanten AST1 und AST2 linear über die Zeit an. Erreichen sie ihr jeweiliges Maximum, welches durch eine Abfrage des Überlaufs der Addierer 111, 112 festgestellt wird, bleiben sie solange auf diesem Maximalwert stehen, bis bei einer erneuten Störung das Signal DD2 wieder auf 0 geht und damit die Register schlagartig zurücksetzt.

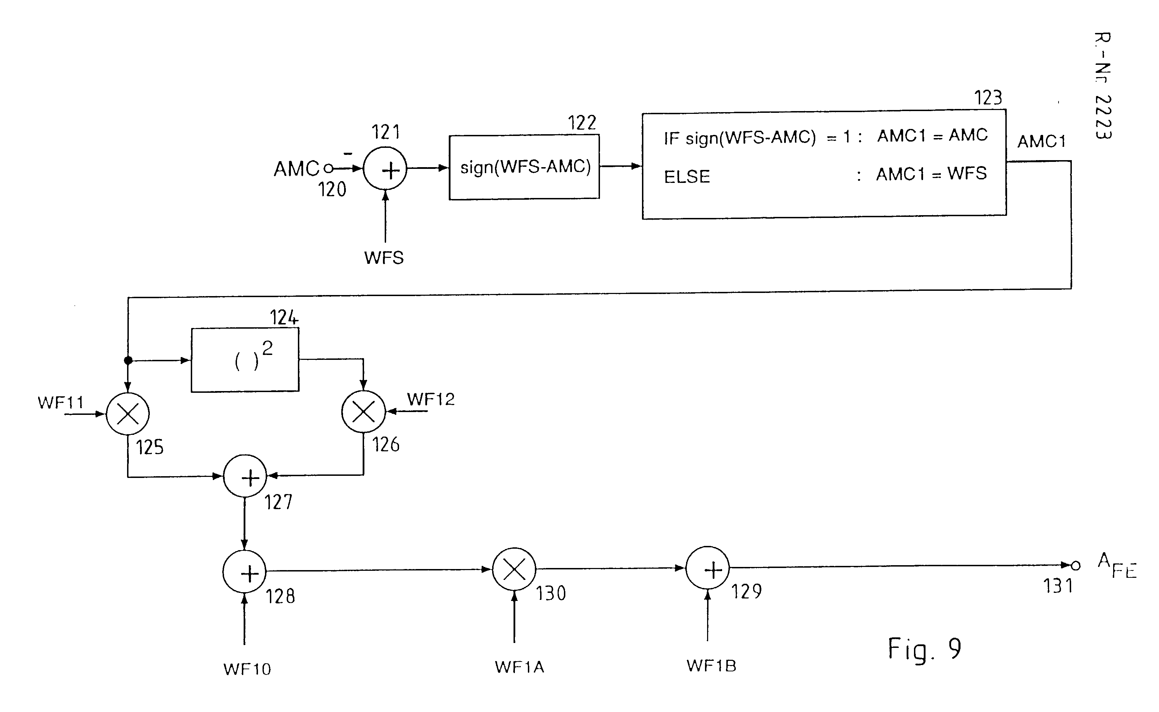

Fig. 9 zeigt ein Ausführungsbeispiel für die Schaltung 9 zur Wichtung des Signals AMC, das einem Eingang 120 zuführbar ist. Mit Hilfe eines Subtrahierers 121, der Feststellung des Vorzeichens bei 122 und einer Auswertung 123 wird ein Signal AMC1 erzeugt, das bis zu einem Schwellwert WFS dem Signal AMC entspricht und dann bei größerwerdendem AMC auf dem Wert WFS verbleibt. Dieses Signal wird bei 124 quadriert.

Das Signal AMC1 sowie das quadrierte Signal werden jeweils mit Koeffizienten WF11 und WF12 bei 125, 126 multipliziert, so daß durch eine Addition bei 127 ein Signal entsteht, das in quadratischer Abhängigkeit zum Signal AMC innerhalb des Bereichs von 0 bis WFS steht. Ein weiterer Addierer 128, 129 sowie ein weiterer Multiplizierer 130 ermöglichen die Addition von Konstanten WF10 und WF1B sowie die Multiplikation mit einem Faktor WF1A. Am Ausgang 131 ist dann das Signal A_{FE} abnehmbar. Die Schaltungsanordnung 22 zur Wichtung des Signals FST16 kann in ähnlicher Weise aufgebaut sein.

## Patentansprüche

1. Verfahren zur Ableitung mindestens eines von der Qualität eines empfangenen Signals abhängigen Qualitätssignals (D, AFE_AMU), wobei
- das empfangene Signal demoduliert wird,
- ein von der Feldstärke abhängiges Hilfssignal (FST16) und ein weiteres Hilfssignal (DD2) aus dem demodulierten Signal abgeleitet werden,
- das Hilfssignal (FST16) und das weitere Hilfssignal (DD2) zur Bildung des mindestens einen Qualitätssignals (D, AFE_AMU) verknüpft werden, und
- das weitere Hilfssignal (DD2) durch Verknüpfung eines ersten, von der Amplitude der oberhalb eines Nutzfrequenzbereichs liegenden Anteile des demodulierten Signals abhängenden Signals (AHD) und eines zweiten, von der Symmetrie der Seitenbänder eines im demodulierten Signal enthaltenen modulierten Hilfsträgers abhängenden Signals (ASD) gebildet wird.

2. Verfahren nach Anspruch 1, **dadurch gekennzeichnet, dass** bei einem Stereo-Multiplexsignal die höherfrequenten Anteile oberhalb von 60 kHz liegen.

3. Verfahren nach Anspruch 1 oder 2, **dadurch gekennzeichnet, dass** der modulierte Hilfsträger ein hilfsträgerfrequentes Stereo-Differenzsignal ist.

4. Verfahren nach Anspruch 3, **dadurch gekennzeichnet, dass** das hilfsträgerfrequente Stereo-Differenzsignal durch Multiplikation mit einem mit dem Hilfsträger verkoppelten Referenzträger demoduliert wird, und dass zur Ableitung des von der Symmetrie der Seitenbänder abhängenden zweiten Signals (ASD) ein durch die Multiplikation des hilfsträgerfrequenten Stereo-Differenzsignals mit einem um 90° phasengedrehten Referenzträger gewonnenes Signal nach einer Betragsbildung mit einem Schwellwert verglichen wird.

5. Verfahren nach Anspruch 3, **dadurch gekennzeichnet, dass** das hilfsträgerfrequente Stereo-Differenzsignal mit einem nicht mit dem Hilfsträger verkoppelten Referenzträger demoduliert wird, dass zur Ableitung des von der Symmetrie der Seitenbänder abhängenden zweiten Signals (ASD) zwei durch Multiplikation des hilfsträgerfrequenten Stereo-Differenzsignals mit zwei um 90° gegeneinander phasengedrehten Referenzträgern gewonnene Signale mit je einem aus einer Phasenverschiebung zwischen dem Hilfsträger und dem jeweiligen Referenzträger abgeleiteten Korrektursignal multipliziert und anschließend addiert werden, und dass das durch die Addition gewonnene Signal nach einer Betragsbildung mit einem Schwellwert verglichen wird.

6. Verfahren nach einem der Ansprüche 4 oder 5, **dadurch gekennzeichnet, dass** die Betragsbildung durch eine Quadrierung erfolgt.

7. Verfahren nach einem der vorhergehenden Ansprüche, **dadurch gekennzeichnet, dass** das demodulierte Signal ein Stereo-Multiplex-Signal mit einem Radio-Daten-Signal ist, und dass das erste Signal von Anteilen des Stereo-Multiplex-Signals oberhalb 60kHz und das zweite Signal durch Vergleich der Seitenbänder des trägerfrequenten Stereo-Differenzsignals abgeleitet wird, und dass das erste und das zweite Signal zur Bildung des weiteren Hilfssignals über eine Logikschaltung (12) und einen Impulsbreitendiskriminator (13) geleitet werden.

8. Verfahren nach einem der vorhergehenden Ansprüche, **dadurch gekennzeichnet, dass** das erste (AHD) und das zweite Signal (ASD) zur Bildung des weiteren Hilfssignals (DD2) über eine Logikschaltung (12) und einen Impulsbreitendiskriminator (13) geleitet werden.

9. Verfahren nach einem der vorhergehenden Ansprüche, **dadurch gekennzeichnet, dass** zur Ableitung des Hilfssignals (FST16) ein Amplitudendemodulator und ein Tiefpass (6) vorgesehen sind.

10. Verfahren nach Anspruch 9, **dadurch gekennzeichnet, dass** das amplitudendemodulierte empfangene Signal zwei Tiefpässen (6, 7) mit unterschiedlichen Grenzfrequenzen zugeführt wird, und dass die Ausgänge der Tiefpässe mit Eingängen eines Umschalters (8) verbunden sind, der von dem weiteren Hilfssignal (DD2) gesteuert wird.

11. Verfahren nach Anspruch 10, **dadurch gekennzeichnet, dass** das Ausgangssignal (AMC) des Umschalters (8) gewichtet (9) und mit dem über einen asymmetrischen Integrator (21) geleiteten weiteren Hilfssignal (DD2) zur Bildung eines Qualitätssignals (AFE_AMU) multipliziert wird, das zur Dämpfung eines aus dem demodulierten Signal gewonnenen NF-Signals während einer Störung dient.

12. Verfahren nach einem der vorhergehenden Ansprüche, **dadurch gekennzeichnet, dass** das gewichtete Hilfssignal (FST16) und das über einen asymmetrischen Integrator (20) geleitete weitere Hilfssignal (DD2) zur Bildung eines Qualitätssignals (D) multipliziert werden (24), das zur Verringerung der Stereokanaltrennung während einer Störung dient.

## Claims

1. Method for deriving at least one quality signal (D, AFE_AMU) dependent on the quality of a received signal, wherein
- the received signal is demodulated,
- an auxiliary signal (FST16) dependent on the field strength and a further auxiliary signal (DD2) are derived from the demodulated signal,
- the auxiliary signal (FST16) and the further auxiliary signal (DD2) are combined in order to form the at least one quality signal (D, AFE_AMU), and
- the further auxiliary signal (DD2) is formed by combination of a first signal (AHD), dependent on the amplitude of the components of the demodulated signal which lie above a useful frequency range, and a second signal (ASD), dependent on the symmetry of the sidebands of a modulated subcarrier contained in the demodulated signal.

2. Method according to Claim 1, **characterized in that**, in a stereo multiplex signal, the higher-frequency components lie above 60 kHz.

3. Method according to Claim 1 or 2, **characterized in that** the modulated subcarrier is a subcarrier-frequency stereo difference signal.

4. Method according to Claim 3, **characterized in that** the subcarrier-frequency stereo difference signal is demodulated by multiplication by a reference carrier coupled to the subcarrier, and **in that**, in order to derive the second signal (ASD) dependent on the symmetry of the sidebands, a signal obtained by multiplication of the subcarrier-frequency stereo difference signal by a reference carrier phase-shifted through 90° is compared with a threshold value after absolute-value formation.

5. Method according to Claim 3, **characterized in that** the subcarrier-frequency stereo difference signal is demodulated with a reference carrier that is not coupled to the subcarrier, **in that**, in order to derive the second signal (ASD) dependent on the symmetry of the sidebands, two signals obtained by multiplication of the subcarrier-frequency stereo difference signal by two reference carriers that are phase-shifted through 90° relative to one another are multiplied by a respective correction signal derived from a phase shift between the subcarrier and the respective reference carrier and are then added, and **in that** the signal obtained by the addition is compared with a threshold value after absolute-value formation.

6. Method according to either of Claims 4 and 5, **characterized in that** the absolute-value formation is effected by squaring.

7. Method according to one of the preceding claims, **characterized in that** the demodulated signal is a stereo multiplex signal with a radio data signal, and **in that** the first signal is derived from components of the stereo multiplex signal above 60 kHz and the second signal is derived by comparison of the sidebands of the carrier-frequency stereo difference signal, and **in that** the first and the second signal, for the purpose of forming the further auxiliary signal, are conducted via a logic circuit (12) and a pulse width discriminator (13).

8. Method according to one of the preceding claims, **characterized in that** the first (AHD) and the second signal (ASD), for the purpose of forming the further auxiliary signal (DD2), are conducted via a logic circuit (12) and a pulse width discriminator (13).

9. Method according to one of the preceding claims, **characterized in that** an amplitude demodulator and a low-pass filter (6) are provided for deriving the auxiliary signal (FST16).

10. Method according to Claim 9, **characterized in that** the amplitude-demodulated received signal is fed to two low-pass filters (6, 7) having different cut-off frequencies, and **in that** the outputs of the low-pass filters are connected to inputs of a changeover switch (8), which is controlled by the further auxiliary signal (DD2).

11. Method according to Claim 10, **characterized in that** the output signal (AMC) of the changeover switch (8) is weighted (9) and multiplied by the further auxiliary signal (DD2), conducted via an asymmetrical integrator (21), for the purpose of forming a quality signal (AFE_AMU), which serves for attenuating an AF signal, obtained from the demodulated signal, during interference.

12. Method according to one of the preceding claims, **characterized in that** the weighted auxiliary signal (FST16) and the further auxiliary signal (DD2) conducted via an asymmetrical integrator (20) are multiplied (24) in order to form a quality signal (D), which serves for reducing the stereo channel separation during interference.

## Revendications

1. Procédé pour déduire au moins un signal de qualité (D, AFE_AMU), dépendant de la qualité d'un signal de réception, selon lequel
- on démodule le signal reçu,
- on déduit du signal démodulé, un signal auxiliaire (FST16) dépendant de l'intensité du champ et un autre signal auxiliaire (DD2),
- on combine le signal auxiliaire (FST16) et l'autre signal auxiliaire (DD2) pour former au moins un signal de qualité (D, AFE_AMU) et
- on forme l'autre signal auxiliaire (DD2) en combinant un premier signal (AHD), dépendant de l'amplitude de la composante du signal démodulé situé au-dessus d'une plage de fréquences utile et un second signal (ASD) dépendant de la symétrie des bandes latérales d'une porteuse auxiliaire, modulée, contenue dans le signal démodulé.

2. Procédé selon la revendication 1,
**caractérisé en ce que**
dans le signal multiplex stéréo, les composantes hautes fréquences sont supérieures à 60 kHz.

3. Procédé selon l'une quelconque des revendications 1 ou 2,
**caractérisé en ce que**
la porteuse auxiliaire modulée est un signal de différence stéréo à la fréquence de la porteuse auxiliaire.

4. Procédé selon la revendication 3,
**caractérisé en ce que**
le signal de différence stéréo à la fréquence de la porteuse auxiliaire démodulée par multiplication avec une porteuse de référence couplée à la porteuse auxiliaire et
pour déduire le second signal (ASD) dépendant de la symétrie des bandes latérales, après formation d'un module on compare à un seuil un signal obtenu par la multiplication du signal de différence stéréo à la fréquence de la porteuse auxiliaire avec une porteuse de référence déphasée de 90°.

5. Procédé selon la revendication 3,
**caractérisé en ce qu'**
on démodule le signal de différence stéréo à a fréquence auxiliaire à une porteuse de référence non couplée à la porteuse auxiliaire,
pour déduire le second signal (ASD) dépendant de la symétrie des bandes latérales, deux signaux obtenus par multiplication des deux signaux de différence stéréo à la fréquence de la porteuse auxiliaire avec deux porteuses de référence déphasées de 90°, sont multipliés avec chaque fois un signal de correction déduit du déphasage entre la porteuse auxiliaire et la porteuse de référence respective et ensuite sont additionnés, et
le signal obtenu par addition est comparé à un seuil après formation d'un module du signal.

6. Procédé selon l'une des revendications 4 ou 5,
**caractérisé en ce qu'**
on forme le module par une élévation au carré.

7. Procédé selon l'une quelconque des revendications précédentes,
**caractérisé en ce que**
le signal démodulé est un signal multiplex stéréo avec un signal de données radio,
le premier signal est déduit de composantes du signal multiplex stéréo au-dessus de 60kHz et le second signal est déduit de la comparaison des bandes latérales du signal de différence stéréo à la fréquence de la porteuse, et
pour former l'autre signal auxiliaire, le premier et le second signal sont transmis par un circuit logique (12) et un discriminateur de largeur d'impulsion (13).

8. Procédé selon l'une quelconque des revendications précédentes,
**caractérisé en ce que**
le premier signal (AHD) et le second signal (ASD) sont transmis par un circuit logique (12) et un discriminateur de largeur d'impulsion (13) pour former l'autre signal auxiliaire (DD2).

9. Procédé selon l'une quelconque des revendications précédentes,
**caractérisé par**
un démodulateur d'amplitude et un filtre passe-bas (6) pour déduire le signal auxiliaire (FST16).

10. Procédé selon la revendication 9,
**caractérisé en ce qu'**
on applique le signal reçu, démodulé en amplitude à deux filtres passe-bas (6, 7) avec des fréquences limites différentes et on relie les sorties des filtres passe-bas aux entrées d'un commutateur (8) commandé par l'autre signal auxiliaire (DD2).

11. Procédé selon la revendication 10,
**caractérisé en ce qu'**
on pondère (9) le signal de sortie (AMC) du commutateur (8) et on le multiplie avec l'autre signal auxiliaire (DD2) transmis par un intégrateur asymétrique (21) pour former un signal de qualité (AFE_AMU, qui sert à l'amortissement d'un signal basse fréquence obtenu à partir du signal démodulé pendant une perturbation.

12. Procédé selon l'une quelconque des revendications précédentes,
**caractérisé en ce qu'**
on multiplie (24) le signal auxiliaire pondéré (FST16) et l'autre signal auxiliaire (DD2) transmis par un intégrateur asymétrique (20) pour former un signal de qualité (D) servant à diminuer la séparation de canaux stéréo pendant une perturbation.
